Europäisches Patentamt

European Patent Office

Office européen des brevets

(19)

(11) Veröffentlichungsnummer: **0 031 439**
**A2**

(12) **EUROPÄISCHE PATENTANMELDUNG**

(21) Anmeldenummer: **80107138.2**

(22) Anmeldetag: **18.11.80**

(51) Int. Cl.³: **F 24 J 3/04**

(30) Priorität: **26.11.79 DE 2947925**

(43) Veröffentlichungstag der Anmeldung: **08.07.81**
**Patentblatt 81/27**

(84) Benannte Vertragsstaaten: **AT BE CH FR GB IT LI LU NL SE**

(71) Anmelder: **Joh. Vaillant GmbH u. Co, Berghauser Strasse 40 Postfach 10 10 20, D-5630 Remscheid (DE)**

(72) Erfinder: **Gruschka, Horst, Am hohen Wald 3, D-5630 Remscheid (DE)**
Erfinder: **Geleslc, Antun, Gräfrather Weg 94, D-4040 Neuss (DE)**
Erfinder: **Kampfenkel, Ottomar, Jung-Stilling-Strasse 38, D-5609 Hückeswagen (DE)**

(54) **Sorptionswärmepumpe.**

(57) Die vorliegende Erfindung bezieht sich auf eine Sorptionswärmepumpe zum Aufheizen eines Verbraucherfluids für eine Heizungsanlage oder einen Brauchwasserbereiter dienend. Hierbei kann das Verbraucherfluid ein- oder mehrstufig aufgeheizt werden. Bei einer mehrstufigen Aufheizung kann man einen Temperaturwechsler vorsehen, der die letzte Stufe der Aufheizung bildet, wobei der Temperaturwechsler unmittelbar aus dem Austreiber gespeist ist. Da man eine so hohe Aufheizung im Zuge des Verbrauchers nicht benötigt, ist es sinnvoller, die nicht benötigte Wärme im System der Sorptionswärmepumpe zu belassen, weshalb der Temperaturwechsler aus zwei Wärmetauschern gebildet ist, die von der einen Seite unmittelbar mit der warmen Lösung aus dem Austreiber beaufschlagt werden und andererseits entweder dem Verbraucherkreis oder der Rücklaufleitung für reiche Lösung zum Austreiber zugeordnet sind. Die Umschaltung geschieht über ein Drei-Wege-Ventil, das temperaturgesteuert ist.

- 1 -

## Sorptionswärmepumpe

Die vorliegende Erfindung bezieht sich auf eine Sorptionswärmepumpe gemäß dem Oberbegriff des Hauptanspruchs.

Aus der DE-OS 27 36 436 ist eine Sorptionswärmepumpe bekanntgeworden, bei der ein Verbraucherfluid in einem Kreislauf umgewälzt wird und dreistufig aufgeheizt wird. Der Verbraucherrücklauf ist zunächst an den Kondensator der Wärmepumpe angeschlossen, anschließend findet eine zweite Aufheizung im Absorber der Wärmepumpe statt, während die letzte Aufheizung in einer dritten Stufe in einem Temperaturwechsler erfolgt, der sekundärseitig unmittelbar mit dem Austreiber verbunden ist.

In der Praxis hat sich gezeigt, daß eine derartige dreistufige Aufheizung zur Erzielung einer möglichst hohen Vorlauftempe-

– 2 –

ratur im Verbraucherkreis gar nicht immer notwendig ist. Auch bezüglich des Wärmeverhältnisses der Wärmepumpe ist es immer wünschenswert, die Aufheizung auf einem niedrigeren Temperaturniveau enden zu lassen.

Der vorliegenden Erfindung liegt somit die Aufgabe zugrunde, eine mehrstufige Aufheizung des Verbrauchers in einem zusätzlichen Wärmetauscher nur dann vorzusehen, wenn die Temperatur im Verbraucher, sei es Zapfwasser oder sei es Heizungskreislauf, es erfordert. Besteht die Notwendigkeit einer Nachheizung nicht, wird der Temperaturwechsler so geschaltet, daß die arme Lösung aus dem Austreiber nur in Wärmeaustausch mit der reichen Lösung tritt, die dem Austreiber anschließend zugeführt wird.

Die Lösung dieser Aufgabe besteht bei einer Sorptionswärmepumpe gemäß der eingangs näher bezeichneten Art in den im kennzeichnenden Teil des Hauptanspruchs aufgenommenen Merkmalen.

Die aus den Unteransprüchen ersichtlichen Ausgestaltungen und Weiterbildungen der Erfindung unterstützen die durch die Merkmale des Hauptanspruchs angestrebte Arbeitsweise und bilden sie weiter aus.

Anhand der Figuren eins bis fünf der Zeichnungen sind Ausführungsbeispiele der Erfindung näher erläutert.

Es zeigen:

Figur eins eine schematische Querschnittsdarstellung durch einen Schacht eines Wohngebäudes mit einer eingebauten Absorptionswärmepumpe,

Figur zwei eine schematische Darstellung des Aufbaues der Absorptionswärmepumpe,

Figur drei eine schematische Querschnittsdarstellung eines Wärmetauschers für die Absorptionswärmepumpe,

Figur vier einen Auschnittsbereich des Wärmetauschers und

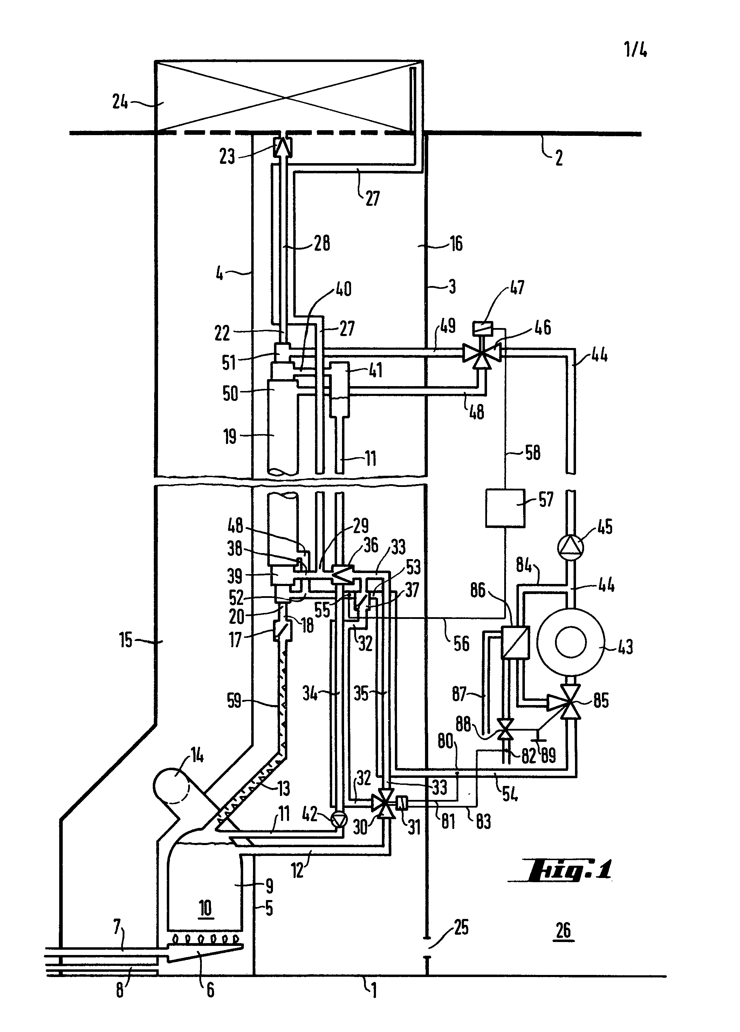

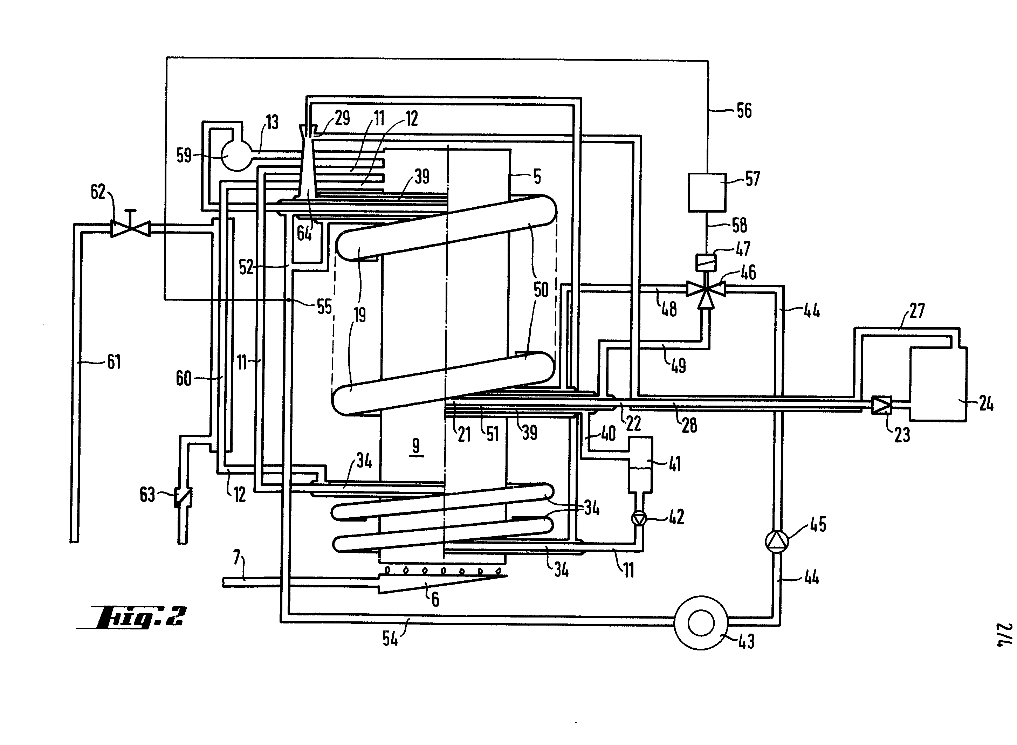

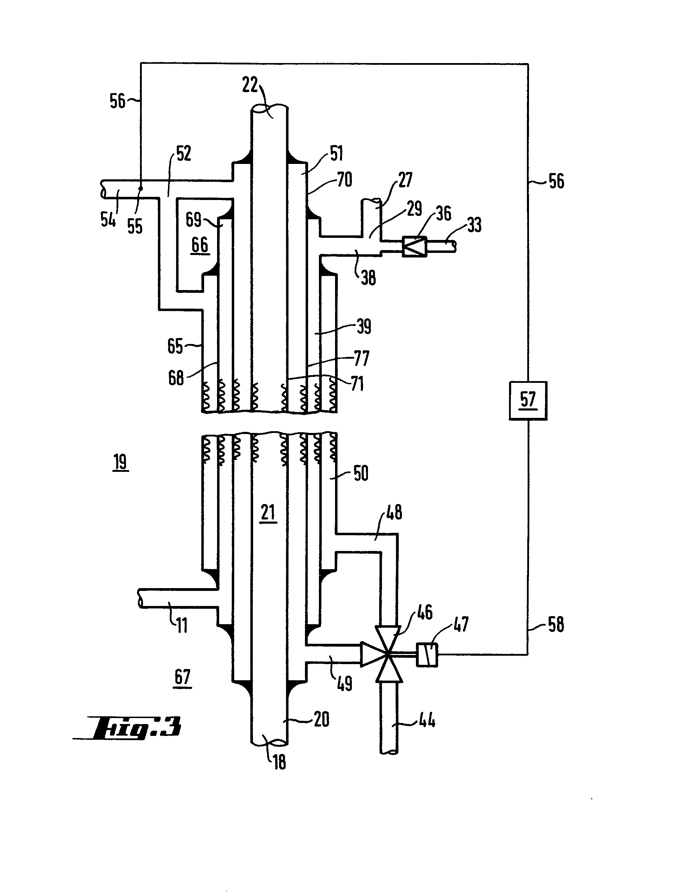

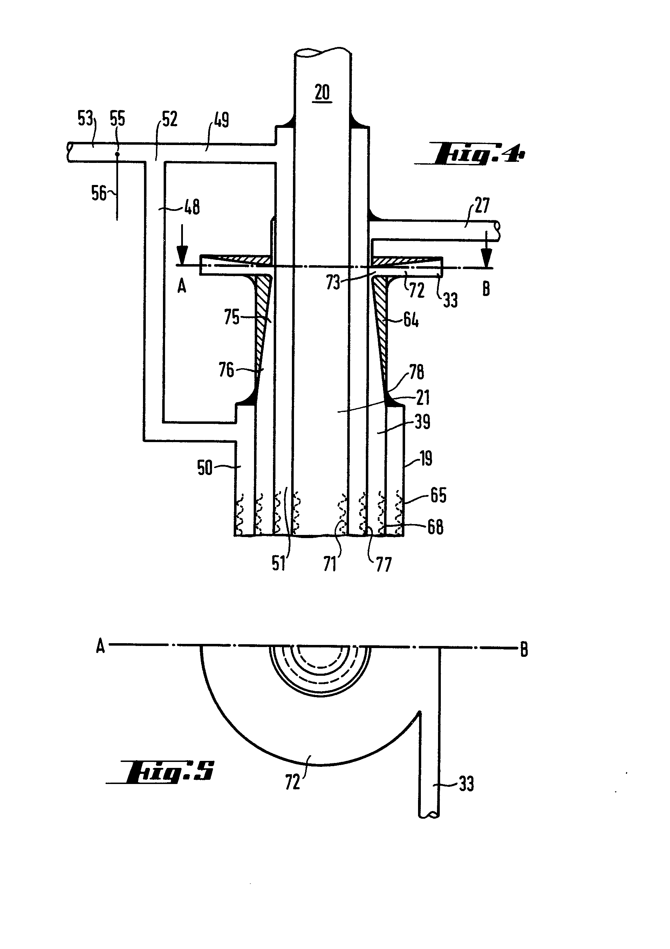

Figur fünf eine weitere Querschnittsdarstellung senkrecht zur Zeichenebene der Figur vier.

In allen fünf Figuren bedeuten gleiche Bezugszeichen jeweils die gleichen Einzelheiten.

In einem Wohngebäude beliebiger Art - es kann sich hier um ein Einfamilienhaus, ein Geschäftshaus oder auch ein Hochhaus handeln - ist zwischen einer Kellerebene 1 und einer Dachebene 2 ein Schacht 3 vorgesehen, der mit einer Zwischenwand 4 unterteilt sein kann. Oberhalb der Kellerebene ist ein Austreiber 5 vorgesehen, der von einem Gas- oder Ölbrenner 6 gespeist ist. Zu dem Gas- oder Ölbrenner führt eine Brennstoff-Zufuhrleitung 7 von einer nicht dargestellten

- 4 -

Vorratsquelle; gleichfalls führt ein Frischluft-Zufuhrrohr 8 von der Atmosphäre in das Innere des Austreibers 5. Der Austreiber weist ein Druckgefäß 9 auf, dessen Inneres mit einer Ammoniak-Wasserlösung 10 gefüllt ist. In das Innere des Druckgefäßes führt eine Leitung 11 für reiche Lösung, die dem Austreiber 5 zugeführt wird. Das Druckgefäß 9 verläßt eine Leitung 12 für aus dem Austreiber 5 ausgetriebene arme Lösung, weiterhin eine Leitung 13 für ausgetriebenen Kältemitteldampf. Ferner führt aus dem Innenraum des Austreibers 5 ein Abgasstutzen 14 für die Verbrennungsprodukte des Brenners 6.

Im dargestellten Ausführungsbeispiel der Figur eins mündet der Abgasstutzen 14 in einen Teilbereich 15 des Schachtes 3. Dieser Teilbereich 15 des Schachtes 3 mündet im Bereich der Dachebene 2. Die Zwischenwand 4 trennt einen weiteren Teilbereich 16 des Schachtes ab, in dem die übrigen Elemente der Absorptionswärmepumpe untergebracht sind. Im Teilbereich 16 des Schachtes 3 führt die Leitung 13 für ausgetriebenen Kältemitteldampf zunächst zu einem Rückschlagventil 17. Der Bereich der Leitung 13 kann zwischen dem Druckgefäß 9 und dem Rückschlagventil 17 als Dephlegmator 59 ausgebildet sein, im Falle der Kühlung dieses Leitungsteils kann mitgerissenes Lösungsmittel im Bereich des Dephlegmators niedergeschlagen werden und läuft durch die Leitung 13 in das Druckgefäß 9 zurück.

Vom Rückschlagventil 17 führt ein kurzes Leitungsstück 18 in einen Kombinationswärmetauscher 19, der aus konzentrisch aufgebauten Rohren besteht, die im einzelnen aus der Figur drei ersichtlich sind. Dieser Kombinationswärmetauscher 19 weist in seinem inneren Teil 20 den Kondensator 21 auf. Vom Ende des Kondensators 21 führt eine Leitung 22 über ein Expansionsventil 23 zu einem Verdampfer 24, der sich im Bereich der Dachebene 2 oder darüber befindet, in jedem Fall aber das obere Ende des Schachtes 3 abschließt. Somit ist sichergestellt, daß das gesamte den Abgasstutzen 14 verlassende Abgas des Brenners 6 den Verdampfer 24 durchsetzt. Außer durch das Abgas kann aber der Verdampfer auch über den Teilbereich 16 des Schachtes 3 von Abluft aus dem Gebäude beaufschlagt werden, um diese Abluft auch zu nutzen. Zu diesem Zweck kann im Bereich des Schachtes 3 eine Entlüftungsöffnung 25 vorgesehen werden, um aus dem Innenraum 26 des Gebäudes Abluft durch ein im Bereich des Verdampfers vorgesehenes Gebläse abzusaugen. Die Wärme der Abluft kann somit im Bereich des Verdampfers mitgenutzt werden.

Vom Verdampfer 24 führt eine Leitung 27 zu einem Kältewechsler 28, der einen Wärmetausch zwischen dem in der Leitung 22 geführten kondensierten Kältemittel und dem verdampften Kältemittel der Leitung 27 bewirkt. Die Leitung 27 setzt sich hinter dem Kältewechsler 28 fort und führt zu einer Zusammenführungsstelle 29. Zu der Zusammenführungsstelle 29 führt außer der Leitung 27 noch die Leitung 12, in derem Zug ein Drei-Wege-Umschaltventil 30 vorgesehen ist. Dieses Drei-Wege-Umschaltventil 30 wird von einem Umschaltmagneten 31 beaufschlagt. Während die Leitung 12 arme Lösung fördert, verlassen das Drei-Wege-Umschaltventil zwei Leitungen 32 und 33. Die Leitung 32 führt zu einem Temperaturwechsler 34, so daß die arme Lösung in der Leitung 32 in Temperaturaustausch mit der reichen Lösung in der Leitung 11 steht, sofern das Ventil 30 entsprechend geschaltet ist. Die Leitung 33 führt zu einem Wärmetauscher 35, von wo sich die Leitung 33 fortsetzt und über ein Expansionsventil 36 zur Zusammenführungsstelle 29 führt. Die Leitung 32 setzt sich hinter dem Temperaturwechsler 34 gleichfalls fort und führt über ein Rückschlagventil 37 zur Leitung 33.

Von der Zusammenführungsstelle 29 führt eine Leitung 38 zu einem Absorber 39, der gleichfalls Teil des Kombinationswärmetauschers 19 ist, aber konzentrisch um den Kondensator 21 herumgelegt ist.

Vom Absorber-Ende führt eine Leitung 40 zu einem Sammler 41, dem die reiche Lösung, die sich dort sammelt, über eine Lösungsmittelpumpe 42 entzogen und der Leitung 11 zugeführt wird. Die Leitung 11 bringt die reiche Lösung aus dem Sammler 41 in den Innenraum des Druckgefäßes 9.

Ein Verbraucher 43 in Gestalt einer Vielzahl parallel- oder in Serie geschalteter Radiatoren und/oder eines Brauchwasserbereiters weist eine Rücklaufleitung 44 auf, in die eine Heizungsumwälzpumpe 45 eingeschaltet ist. Die Rücklaufleitung 44 führt zu einem Drei-Wege-Umschaltventil 46, das von einem Betätigungsmagneten 47 beaufschlagt wird. Das Drei-Wege-Umschaltventil 46 verlassen parallelliegende Leitungen 48 und 49, die das Heizungswasser führen, und zwar in unterschiedlich bestimmten Anteilen. Auf keinen Fall kann das Drei-Wege-Umschaltventil 46 so geschaltet werden, daß eine der Leitungen 48 oder 49 nicht vom Heizungswasser beaufschlagt ist. Die Leitung 48 führt in den Außenmantelraum 50 des Kombinationswärmetauschers 19 und kühlt somit den Außenbereich des Absorbers 39. Die Leitung 49 führt in einen Ringraum 51 zwischen Absorber und Kondensator. Die beiden Leitungen 48 und 49 setzen sich hinter dem Kombinationswärmetauscher fort und werden im Bereich einer Zusammenführungsstelle 52 zusammengeführt, um über eine Leitung 53 dem Wärmetauscher 35 zugeführt zu werden. Die den Wärmetauscher 35 verlassende Leitung 54 ist die Vorlaufleitung für den Verbraucher 43.

Es ist möglich, die Zwischenwand 4 entfallen zu lassen und das Abgas vom Abgasstutzen 14 durch den gesamten Innenraum des Schachtes 3 strömen zu lassen. Das hätte den Vorteil, daß alle Rohrleitungen der Absorptionswärmepumpe und des Verbraucherkreislaufes zusammen vom Abgas erwärmt werden. Man würde dann allerdings die Bereiche der Leitungen 48 und 49 so kurz wie möglich halten und ggf. isolieren, um die Kühlung des Kondensators und Absorbers zu optimieren. Eine nennenswerte Beeinträchtigung des Absorbers und Kondensators durch die Aufheizung mittels des Abgases tritt nicht ein, da diese beiden Elemente die inneren Teile des Kombinationswärmetauschers 19 bilden. Man müßte, falls man den Bereich der Leitung 13 als Dephlegmator wirken lassen will, diesen Bereich aus dem Schacht herausnehmen. Es wäre auch möglich, diesen Bereich der Leitung 13 vom Wasser der Rücklaufleitung 44 zu kühlen, um die Dephlegmatorwirkung nicht zu beeinträchtigen. Es besteht die Möglichkeit, die gesamte nutzbare Gebäudehöhe für die Erstreckung des Kombinationswärmetauschers 19 auszunutzen, d. h., man könnte den Kombinationswärmetauscher als konzentrischen Zylinder gestreckt über die gesamte Höhe bauen oder auch zu einer Wendel aufwickeln und die Wendelachse im Bereich des Schachtes senkrecht anordnen. Das Mengenverhältnis der die Leitungen 48 und 49 durchsetzenden Anteile des Verbraucherkreislaufes wird gesteuert in Abhängigkeit von einem Temperaturfühler 55, der im Bereich der Leitung 53 angeordnet ist und das Mengenverhältnis zwischen den Anteilen, die die Leitungen 48 und 49 durchströmen, so steuert, daß der gemessene Temperaturwert in der Leitung 53 ein Maximum erreicht. Der Temperaturfühler 55 ist über eine Meßleitung 56 mit einem Vergleicher 57 verbunden ist, dessen Stelleitung 58 auf den Betätigungsmagneten 47 einwirkt.

Falls die Wärmemengen, die dem Verdampfer 24 über den Schacht 3 in der Zeiteinheit zugeführt werden, nicht ausreichen, wird der Verdampfer 24 zusätzlich einem Luftstrom der Atmosphäre über nicht dargestellte Gebläse ausgesetzt. Es besteht auch die Möglichkeit, dem Verdampfer 24 über Sonnenkollektoren Wärme zuzuführen.

Die Wärmepumpe kann auch als Resorptionswärmepumpe ausgebildet sein; der Entgaser wird die Stelle des Verdampfers 24 auf dem Dach 2, der Resorber die Stelle des Kondensators 21 einnehmen.

Bei dem Ausführungsbeispiel nach Figur zwei ist gleichfalls ein Austreiber 5 vorgesehen, der von einem Brenner 6 gespeist ist, dem Brennstoff über eine Leitung 7 zugeführt ist. Um das Druckgefäß 9 dieses Austreibers 5 ist der Wärmetauscher 19 in Form einer Schraube herumgewickelt. Das würde man dann tun, wenn man nicht, wie im Falle der Figur eins, einen längeren Schacht 3 zur Verfügung hätte, sondern wenn man relativ kompakt bauen müßte. Der Abstand der einzelnen Windungen des Kombinationswärmetauschers 19 kann so gering werden, daß die einzelnen Windungen aneinander liegen. Somit kann die gesamte Strahlungswärme des Austreibers 5 genutzt werden. Der wesentliche Unterschied zwischen den Ausführungsbeispielen nach den Figuren eins und zwei liegt darin, daß das Drei-Wege-Ventil 30 fehlt. Die Leitung 12 für die ausgetriebene arme Lösung ist über einen Brauchwasser-Wärmetauscher 60 geführt, der im Zuge einer Zapfleitung 61 liegt, die von einem Zapfventil 62 beherrscht ist und in die ggf. ein Rückschlagventil 63 eingefügt ist. Der Wärmetauscher 60 wird somit nur wirksam, wenn Brauchwasser gezapft wird.

Nur in diesem Fall wird die hocherhitzte arme Lösung vom Wärmetauscher 60 gekühlt. Findet dort keine Kühlung statt, wird die hocherhitzte arme Lösung in jedem Fall über den Temperaturwechsler 34 gekühlt, und zwar von der reichen Lösung, die dem Austreiber zugeführt wird. Ein weiterer Unterschied zwischen den Ausführungsbeispielen liegt darin, daß das Expansionsventil 36 durch einen Strahlapparat 64 ersetzt ist.

- 10 -

Neben dem Verbraucher, bestehend aus den Elementen 60, 61, 62 und 63 für die Brauchwasserbereitung, ist ein weiterer Verbraucher in Form von Radiatoren 43 vorhanden. Dieser Verbraucher ist einstufig aufgeheizt, und zwar im Bereich des Kombinationswärmetauschers 19 durch Kühlung des Kondensators und des Absorbers über die Umschaltung und Strömungsverteilung in den Leitungen 48 und 49. Die Schaltung nach Figur zwei wird man dann nehmen, wenn man eine relativ niedrige Vorlauftemperatur im Bereich der Leitung 54 benötigt, beispielsweise also für Fußbodenheizungen. Schließlich ist im Ausführungsbeispiel nach Figur zwei ebenfalls ein Dephlegmator 59 vorgesehen, der durch nicht dargestellte Maßnahmen gesondert gekühlt ist.

Der Ausbau des Kombinationswärmetauschers 19 ist im einzelnen Gegenstand der Figur drei. Man sieht, daß es sich um einen im wesentlichen zylindrischen Aufbau handelt, die Länge des Zylinders hängt im wesentlichen von der Auslegung der Absorptionswärmepumpe ab. Der Zylinder selbst kann aufgewickelt sein, wie es z. B. die Figur zwei zeigt. Man wird also bevorzugt den Kombinationswärmetauscher 19 aus flexiblem Material aufbauen. Man könnte diesen Kombinationswärmetauscher 19 zur Verbesserung der Durchmischung im Absorber auch um eine horizontale Achse aufwickeln. Der Kombinationswärmetauscher 19 besteht aus Edelstahl-Ringwellschläuchen, die durch nicht dargestellte Distanzstücke auf Abstand gehalten werden. Der äußerste Mantel 65, der der Begrenzung des Wasserraums 50 dient, nimmt an dem Wärmetausch nicht mehr teil und kann

- 11 -

aus Kostengründen aus billigem Kunststoff hergestellt sein.
Bei einer Temperaturbeaufschlagung, die beispielsweise im
Schacht 3 stattfindet, ist es zweckmäßig, für die Außenhaut
65 ein anderes Material zu wählen. Der Kombinationswärmetauscher 19 ist an beiden Enden 66 und 67 stufenförmig abgesetzt,
und zwar wird das Teil mit der kürzesten Axialerstreckung
durch den Außenmantel 65 gebildet. Der Wasserraum 50 ist
somit an seiner Außenseite von dem Außenmantel 65 begrenzt
und an seiner Innenseite von einem Ringwellschlauch 68. Der
Ringwellschlauch 68 ragt axial über den Außenmantel 65 hervor,
in diesem überstehenden Bereich 69 ist die Leitung 38 radial
an den Ringwellschlauch angeschlossen. Über den Ringwellschlauch
68 ragt ein weiterer Ringwellschlauch 77 axial hinaus, im
Bereich dieses freiliegenden Endes 70 ist die Leitung 54 bzw.
49 angeschlossen. Der das Zentrum bildende Ringwellschlauch
71 nimmt den Kondensator 21 auf bzw. begrenzt ihn. Der Kondensator steht im Zuge der Leitung 18 und der Leitung 22 axial
über den gesamten Kombinationswärmetauscher vor. Die Abstandshalter zwischen den einzelnen Ringwellschläuchen 68, 77 und
71 bzw. unter Umständen 65 können durch lose eingelegte Teile
oder Einschubwendeln gebildet sein. Schließlich könnte man
sich auch vorstellen, daß einzelne Wellen der Ringwellschläuche
über die anderen Wellen hervorstehen, so daß man auf diese
Art und Weise eine Abstandshaltung erzielen könnte.

Bei dem Ausführungsbeispiel nach den Figuren vier und fünf
ist der Strahlapparat 64 mit dem Kombinationswärmetauscher
19 vereinigt worden. Die Leitung 33, die die arme Lösung vom Austreiber 5 führt, ist in einen Ringraum 72 geführt, der die axiale Begrenzung des Absorbers 39 darstellt. Der Ringraum 72 verengt sich an einer Engstelle 73 und führt über einen ringförmigen Diffusorraum 75 in das Innere des Absorbers 39. Vor dem Ringraum 72 mündet die Leitung 27 im Zuge eines gleichfalls den Ringwellschlauch 77 umgebenden Ringraums, so daß die arme Lösung der Leitung 33 unter Entspannung verdampftes Kältemittel aus der Leitung 27 mitreißt und in den Absorber 39 transportiert. Die Entspannung findet infolge Umwandlung von potentieller Druckenergie im äußeren Bereich des Ringraums 72 in kinetische Energie im inneren Bereich des Ringraums 72 statt. Der Diffusor 76 wird bevorzugt als Drehteil ausgebildet, der an seinem unteren Ende 78 mit dem Ringwellschlauch 68 verbunden ist und der im Bereich der Engstelle nahezu den gleichen Durchmesser hat wie der Ringwellschlauch 77. Durch eine oder andere im engsten Querschnitt des Diffusors 76 vorgesehen, im Zuge der Rotation schräggestellte Nuten wird der erforderliche Ringspalt 73 bewirkt, so daß das Gemisch aus armer Lösung und Kältemitteldampf drallförmig in den Diffusorraum 74 eingeführt wird.

Gemäß Figur eins ist im Zuge der Verbrauchervorlaufleitung 54 ein Temperaturfühler 80 vorgesehen, der über eine Stellleitung 81 mit dem Umschaltmagneten 31 verbunden ist. Der Umschaltmagnet 31 ist hierbei so ausgestaltet, daß das Drei-Wege-Umschaltventil 30 sowohl die Leitung 12 ausschließlich mit der Leitung 32 oder 33 verbinden als auch Zwischenstellungen ermöglichen kann. Alternativ zu dem Temperaturfühler 80 kann

- 13 -

auch ein Temperaturfühler 82 im Zuge einer Zapfleitung vorgesehen sein, der über eine Leitung 83 dann auf den Umschaltmagneten 31 einwirkt. Diese Ausführung ist dann vorteilhaft, wenn parallel zu dem Verbraucher 43, der als eine Vielzahl von Radiatoren ausgestaltet ist, eine Bypaßleitung 84 geschaltet ist, die von einem Drei-Wege-Umsteuerventil 85 beherrscht ist. Im Zuge der Bypaßleitung 84 ist ein Brauchwasser-Wärmetauscher 86 vorgesehen, durch den eine Zapfleitung 87 geführt ist, die an ihrem Ende von einem Zapfventil 88 beherrscht ist. Nach Öffnen des Zapfventiles 88 wird von einem Wassernetz Wasser durch die Zapfleitung 87 in den Brauchwasser-Wärmetauscher 86 gegeben. Der Temperaturfühler 82 mißt die Auslauftemperatur dieser Zapfleitung. Gleichzeitig mit dem Betätigen des Zapfventiles 88 wird über eine Handhabe 89 auch das Drei-Wege-Umsteuerventil 85 geschaltet. Nach Anforderung von Zapfwasser wird somit der Verbraucher 43 von der Wärmepumpe nicht beaufschlagt, nach Beendigen des Zapfvorganges wird das Drei-Wege-Umsteuerventil 85 wieder auf den Verbraucher 43 zurückgeschaltet.

Die Funktion der eben beschriebenen Sorptionswärmepumpe ist folgende:

Der Austreiber 5 wird durch den Brenner 6 mit Wärme versorgt. Als Folge davon wird gasförmiges Ammoniak über die Leitung 13 aus dem Austreiber ausgetrieben und gelangt über das Rückschlagventil 17 in den Kondensator 20. Das Rückschlagventil 17 verhindert einen Rückfließen des kondensierten Kältemitteldampfes. Vom Kondensator gelangt das kondensierte Kältemittel über die Leitung 22 zum Expansionsventil 23, wo das Kältemittel in den Verdampfer 24 hineinverdampft. Das verdampfte
Kältemittel wird über die Leitung 27 abgezogen und gelangt
im Zuge des Kältewechslers 28 in Temperaturaustausch mit dem
aus dem Kondensator stammenden Kältemittel. Das Kältemittel
wird anschließend dem Zusammenführungspunkt 29 zugeführt.
Dem Zusammenführungspunkt 29 wird andererseits über die Leitung 33 auch ausgetriebene arme Lösung aus dem Austreiber
5 zugeführt. Je nach Stellung des Drei-Wege-Umschaltventiles
30 wird die aus dem Austreiber stammende hocherhitzte arme
Lösung der Leitung 12 entweder auf den Temperaturwechsler
34 oder auf den Wärmetauscher 35 geschaltet. Auch Zwischenstellungen mit einer definierten Strömungsverteilung in den Wärmetauscher 34 und 35 sind möglich. Die arme Lösung wird, durch
beide Wärmetauscher abgekühlt, dem Zusammenführungspunkt 29
zugeführt. Vom Zusammenführungspunkt 29 führt eine gemeinsame
Leitung 38 für Kältemitteldampf und arme Lösung zum Absorber
39, dem die durch Absorption entstehende reiche Lösung über
die Leitung 40 abgezogen wird und einem Sammler 41 zugeführt
wird. Vom Sammler 41 wird die reiche Lösung mittels einer
Pumpe 42 der Leitung 11 zugeführt, in derem Zug der Temperaturwechsler 34 liegt.

Der Verbraucher 43 bzw. 86 ist über seine Rücklaufleitung
44 je nach Stellung des Drei-Wege-Umschaltventils 46 parallel
mit dem Absorber und Kondensator verbunden, d. h., das Medium
des Verbrauchers wird in dieser Parallelschaltung in der ersten
Stufe aufgeheizt. Die Verbraucherströme durch Kondensator und Absorber werden im Zusammenführungspunkt 52 zusammengeführt, von diesem Punkt führt die Leitung 53 zu dem Wärmetauscher 35. Ist das Drei-Wege-Umschaltventil 30 so geschaltet, daß die Leitung 12 voll oder teilweise durch den Wärmetauscher 35 geht, wird das Verbraucherfluid hier in einer zweiten Stufe nachgeheizt. Ob und in welchem Maße das erforderlich ist, hängt von dem Soll-/Istvergleich ab, der im Zuge des Temperaturfühlers 80 erfolgt und dessen Ergebnis dem Umschaltmagneten 31 mitgeteilt wird. Ist eine Nachheizung des Verbraucherfluids nicht notwendig, so ist die Leitung 12 ausschließlich auf die Leitung 32 geschaltet, d. h., die aus dem Austreiber ausgetriebene arme Lösung heizt die reiche Lösung der Leitung 11 vor, die anschließend in den Austreiber gelangt. Das bedeutet, daß die Wärmepumpe wirtschaftlicher arbeitet.

Da es häufig vorkommt, daß eine Nachheizung des Verbraucherfluids nur dann erforderlich ist, wenn Zapfwasser gebraucht wird, kann der Wärmetauscher 35 auch von einem Zapfwassertemperaturfühler 82 beaufschlagt werden, der im Zuge der reinen Zapfleitung liegt. Falls nur eine partielle Nachheizung des Verbraucherfluids im Wärmetauscher 35 notwendig ist, kann über den Temperaturfühler 82 auch eine Zwischenstellung des Umschaltmagneten 31 angefahren werden, um eine nur teilweise Nachheizung des Verbraucherfluids vorzunehmen. In jedem Falle soll mit diesen Schaltmaßnahmen sichergestellt werden, daß dem Verbraucher im Zuge einer Nachheizung nur so viel Wärme zugeführt wird, daß die Verbraucher-Sollwerttemperatur, sei es im Zuge der Heizung 43 oder im Zuge der Zapfwasserleitung, gerade erreicht wird. Die hierfür nicht notwendige Wärmemenge verbleibt im Primärkreis der Wärmepumpe,
da der entsprechende Durchsatzanteil auf den Temperaturwechsler 34 geschaltet bleibt. Gemäß dem Ausführungsbeispiel von
Figur zwei sind 2 verschiedene Verbraucher vorgesehen. Der
Verbraucher 43 ist bevorzugt als Fußbodenheizung oder Vielzahl parallelgeschalteter Radiatoren ausgebildet, dieser Verbraucher wird nur über die Parallelschaltung von Kondensator
und Absorber einstufig aufgeheizt. Es ist ein weiterer Verbraucher im Zuge der Zapfleitung 61 vorgesehen, so daß der
Wärmetauscher 60 nur dann in Funktion tritt, wenn Zapfwasser
durch Öffnen des Zapfventils 62 gezapft wird. Die aus dem
Austreiber 5 stammende arme Lösung der Leitung 12 wird somit
nur im Zapfbetrieb gekühlt. Ist der Zapfbetrieb durch Schließen des Ventils 62 beendet, muß sich lediglich das Zapfwasser
im Bereich des Wärmetauschers 60 aufheizen, anschließend findet im Zuge des Wärmetauschers 60 keine Abkühlung der armen
Lösung statt. Die arme Lösung wird vielmehr nur im Zuge des
Temperaturwechslers 34, der der Leitung 12 nachgeschaltet
ist, gekühlt, dieser Wärmeverlust wird aber der Wärmepumpe
wieder zugeführt, da ja die dem Austreiber wieder zugeführte
reiche Lösung im Zuge des Temperaturwechslers 34 aufgeheizt
wird. Der Vorteil dieser Lösung liegt darin, daß man den
Wärmetauscher 60 so ausgestalten kann, daß man eine Zapfwassertemperatur ausreichender Höhe bekommt, ohne hierbei unmittelbar
auf die Temperaturen im Zuge des Verbrauchers 43 Einfluß zu
nehmen. Beide Verbraucherkreise sind unabhängig voneinander.

- 17 -

Der Ventil- und Armaturenaufwand dieser Lösung wird kleiner, da eine Umschaltung des Verbraucherkreislaufes entfällt. Man könnte die Zapfleitung 61 auch zu einem Speicher führen und mit diesen Zapfleitungen eine Speicherladepumpe einschalten, um einen kontinuierlichen Betrieb zu erreichen. Dann müßte das Zapfventil 62 an dieser Stelle entfallen, und man müßte dem Speicher auf andere Art und Weise das Zapfwasser entnehmen.

0031439

- 1 -

Ansprüche

1. Sorptionswärmepumpe mit einem Austreiber, Kondensator, Expansionsventil, Verdampfer und Absorber sowie einem Temperaturwechsler im Zuge der Leitung für arme Lösung aus dem Austreiber und Verbraucherwärmetauschern zum Aufheizen eines Verbraucherfluids im Kondensator/Absorber sowie Temperaturwechsler, dadurch gekennzeichnet, daß die Verbraucherfluid-Rücklaufleitung (44) im Anschluß an eine Aufheizung im Kondensator (21), Absorber (39) über einen Wärmetauscher (35) geführt ist, der andererseits von der Leitung (12) für arme Lösung aus dem Austreiber (5) gespeist und dem der Temperaturwechsler (34) über ein Drei-Wege-Ventil (30) parallel-

- 2 -

geschaltet ist.

2.      Sorptionswärmepumpe mit einem Austreiber, Kondensator, Expansionsventil, Verdampfer und Absorber
sowie einen Temperaturwechsler im Zuge der Leitung
für arme Lösung aus dem Austreiber und Verbraucherwärmetauschern zum Aufheizen eines Verbraucherfluids
im Kondensator, Absorber sowie Temperaturwechsler,
dadurch gekennzeichnet, daß eine zusätzliche Verbraucherleitung (61) mit aufzuheizendem Fluid an
einen Wärmetauscher (60) angeschlossen ist, der
mit dem Temperaturwechsler (34) im Zuge der Leitung (12) für arme Lösung aus dem Austreiber (5)
in Serie geschaltet ist.

3.      Sorptionswärmepumpe nach Anspruch 1, dadurch gekennzeichnet, daß das Drei-Wege-Umschaltventil
(30) von einem Temperaturfühler (80, 82) in einem
Verbraucher (43, 86) gesteuert ist.

**Fig.1**

Fig.2

0031439

2/4

Fig. 3

Fig.4

Fig.5